Europäisches Patentamt

European Patent Office

Office européen des brevets

(19)

(11) Veröffentlichungsnummer: **0 270 854**
**A2**

(12)
# EUROPÄISCHE PATENTANMELDUNG

(21) Anmeldenummer: **87116521.3**

(22) Anmeldetag: **09.11.87**

(51) Int. Cl.⁴: **G02B 6/44**

(30) Priorität: **12.11.86 DE 3638557**

(43) Veröffentlichungstag der Anmeldung:
**15.06.88 Patentblatt 88/24**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Oestreich, Ulrich**
**Karl-Witthalm-Strasse 15**
**D-8000 München 70(DE)**
Erfinder: **Mayr, Ernst**
**Starnberger Wiese 38**
**D-8130 Starnberg(DE)**

(54) **Kabelelement bestehend aus einer Vielzahl von Lichtwellenleitern.**

(57) Zur vereinfachten Farbkennzeichnung sind je 2 Lichtwellenleiter (LW1,LW2) mechanisch zu einem Bändchen (BD) zusammengefaßt, wobei jeweils die beiden Lichtwellenleiter (LW1,LW2) innerhalb eines Bändchens (BD) mit einer unterschiedlichen Farbkennzeichnung (FC1,FC2) versehen sind. Alle Bändchen (BD1,BD2,...) innerhalb des Kabelelementes (CE) weisen gegenseitig unterschiedliche Farbkombinationen auf. Auf diese Weise ist es möglich, mit wenigen Grundfarben eine große Anzahl von Lichtwellenleitern eindeutig innerhalb des Kabelelementes zu identifizieren.

EP 0 270 854 A2

FIG 1

0 270 854

Siemens Aktiengesellschaft                    86 P 1 8 0 3 E
Berlin und München


Kabelelement bestehend aus einer Vielzahl von Lichtwellenleitern

Die Erfindung betrifft ein Kabelelement bestehend aus einer
Vielzahl von Lichtwellenleitern, welche durch unterschiedliche
Farbkennzeichnung unterscheidbar gemacht sind.

Es ist bekannt, mehrere Lichtwellenleiter innerhalb eines Kabelelementes durch unterschiedliche Farbkennzeichnung unterscheidbar zu machen. Da jedoch nur eine begrenzte Anzahl von
Grundfarben zur Verfügung steht, - die wegen der Kleinheit
der Lichtwellenleiteradern ohnehin nur schwer unterscheidbar
sind - lassen sich größere Aderzahlen nicht ohne weiteres
ausreichend kennzeichnen. Es besteht zwar die Möglichkeit,
z.B. durch Ringkennzeichnungen oder dergleichen, eine zusätzliche Markierung aufzubringen, was jedoch einen entsprechenden Mehraufwand bedeutet und zudem u.a. wegen der Kleinheit der so zusätzlich aufgebrachten Markierungen die Unterscheidbarkeit nicht gerade erleichtert. Außerdem sind Rückwirkungen der Ringkennzeichnung auf den Faserverlauf möglich.

Eine andere Möglichkeit der Unterscheidung und Identifizierung der Lichtwellenleiteradern besteht darin, einen Stapel
von einzelnen Lichtwellenleiter-Bändchen zu bilden, wobei
innerhalb des Stapels große Faserzahlen realisiert werden
können. Beispielsweise kann ein Bändchen aus 10 Lichtwellenleiteradern bestehen, so daß sich bei 10 derartig übereinander
gestapelten Lichtwellenleiterbändchen insgesamt 100 Lichtwellenleiteradern zu einem Kabelelement zusammenfassen lassen.
Hierbei genügt es dann z.B. die erste Lichtwellenleiterader
des Stapels zu kennzeichen, um eine Identifizierung zu ermöglichen. Der Nachteil derartiger Strukturen besteht vor allen
Dingen darin, daß diese im Endzustand keine oder keine nennenswerte, für Kabeldehnungen oder Kontraktionen disponible

003 10 01

Längen-Vorräte aufweisen, weil eine Wendelbildung durch Verseilung der Bündelhüllen oder im gestreckten Bündel nicht ohne weiteres möglich ist. Solange die Bändchenstruktur nicht aufgelöst wird, genügt zwar die markante Kennzeichnung einer oder einiger weniger Fasern. Dagegen müssen zu Spleiß- oder Abzweigzwecken aufgelöste Teile eines Bändchen wieder in sich eindeutig gekennzeichnet sein, womit sich die vorher beschriebene Problematik wiederholt. Bei mehr als einem Bändchen in einer gemeinsamen Hülle verschärft sich das Problem bei fehlender Zuordnung der Lichtwellenleiteradern zum Bändchen erneut.

Der vorliegenden Erfindung liegt die Aufgabe zugrunde, eine in einfacher Weise zu realisierende, vielseitig anwendbare und gute Unterscheidungsmöglichkeiten liefernde Farbkennzeichnung der Lichtwellenleiter zu gewährleisten. Diese Aufgabe wird bei einem Kabelelement der eingangs genannten Art dadurch gelöst, daß je zwei Lichtwellenleiter mechanisch zu einem Bändchen zusammengefaßt sind, daß jeweils die beiden Lichtwellenleiter innerhalb eines Bändchens durch eine unterschiedliche Farbkennzeichnung unterscheidbar gemacht sind und daß alle Bändchen innerhalb des Kabelelements gegenseitig unterschiedliche Farbkombinationen aufweisen.

Durch die Zusammenfassung je zweier Lichtwellenleiter zu einem Bändchen entsteht eine Struktur, die mechanisch besonders widerstandsfähig ist, vielseitig weiter verarbeitet werden kann und auch bei einer begrenzten Anzahl von Einzelfarben eine hohe Anzahl von Kombinationsmöglichkeiten liefert. Probleme beim Abzweigen entstehen nicht, weil normalerweise ohnehin 2 Lichtwellenleiter für beide Informationsrichtungen benötigt werden. Der Unterschied des Widerstandsmomentes zwischen der leichten und der schweren Biegeachse eines derartigen Bändchens ist nur der Faktor zwei. Die Wendelbildung eines (nicht tordierten) Bändchens dieser Art ist somit relativ regelmäßig. Der Eigenplatzbedarf für ein vortordiertes Paar ist ein Kreis von nur etwa zweimal dem
Durchmesser einer Lichtwellenleiterader und damit erträglich.

Weiterbildungen der Erfindung sind in Unteransprüchen wiedergegeben.

Die Erfindung und ihre Weiterbildungen werden nachfolgend
anhand von Zeichnungen näher erläutert. Es zeigen:

Figur 1 im Querschnitt den Aufbau eines zwei unterschiedlich
        eingefärbte Lichtwellenleiter enthaltenden Bändchens,
Figur 2 im Querschnitt die Zusammensetzung eines Kabelelementes aus einer Vielzahl von Bändchen nach Figur 1,
Figur 3 die Anwendung von mehreren Bändchen in Stapelbauweise
        und
Figur 4 einen Kabelquerschnitt mit mehreren Einzelbündeln.

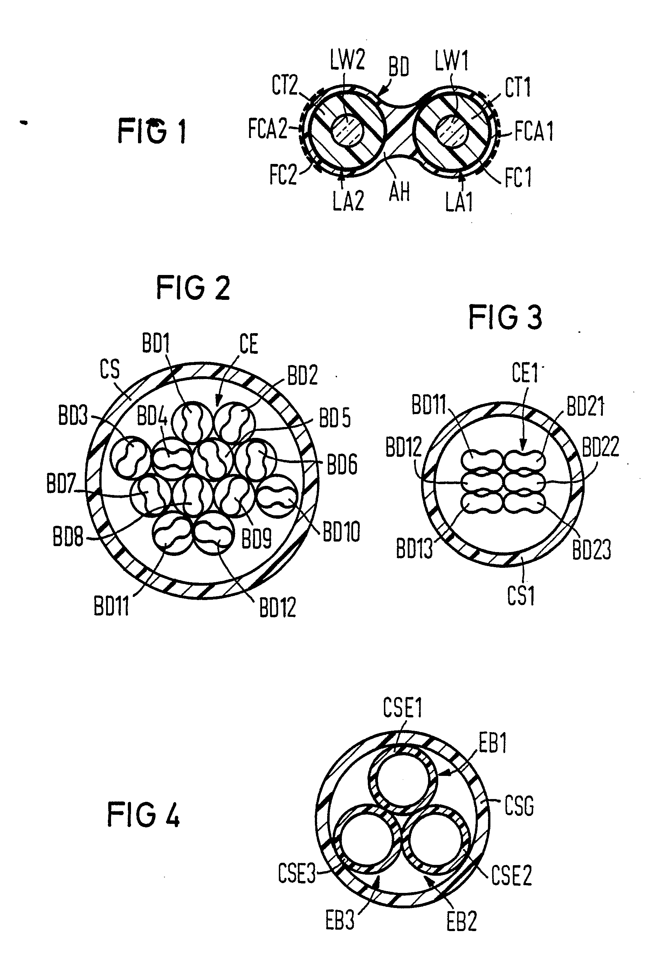

In Figur 1 sind zwei Lichtwellenleiter LW1 und LW2 vorgesehen, die jeweils mit einer Beschichtung (coating) CT1,CT2
versehen sind, so daß Außendurchmesser in der Größenordnung
von etwa 250 µm entstehen. Um die Lichtwellenleiter voneinander unterscheidbar zu machen, sind unterschiedliche Farbkennzeichnungen vorgesehen, was im vorliegenden Ausführungsbeispiel durch eine mit FC1 bzw. FC2 bezeichnete (in Längsrichtung durchgehende) Farbschicht (z.B. in Form einer Lackschicht angedeutet ist. Anstelle von zusätzlich aufgebrachten
Farbschichten kann eine Farbkodierung auch dadurch erfolgen,
daß die zur Beschichtung verwendeten Materialien (coating)
CT1,CT2 unterschiedlich eingefärbt sind. Die beiden so in der
Einfärbung unterschiedlichen Lichtwellenleiteradern LA1 und
LA2 werden durch geeignete Maßnahmen zu einem Bändchen BD
(Leiterpaar) zusammengefaßt, wobei im vorliegenden Beispiel
eine farblose, durchsichtige Außenhülle AH angedeutet ist,
welche beide Lichtwellenleiteradern LA1,LA2 umschließt und in
der Mitte einen mehr oder weniger breiten Steg bildet. Die
Umhüllung AH kann aus einem UV-vernetzbaren Kunststoffmaterial (z.B. Silikon-Akrylat), einem Klebematerial oder durch einen farblosen Lack gebildet werden. Die Verwendung von UV-härtbarem Silikon-Akrylat ist besonders vorteilhaft, weil dadurch die Trennbarkeit der Lichtwellenleiteradern LA1 und LA2 erleichtert wird.

Sofern man die einzelnen Lichtwellenleiteradern LA1 und LA2 nicht selbst einfärben will, besteht auch die Möglichkeit, die Außenhülle AH an den beiden Seiten unterschiedlich einzufärben, z.B. den linken Teil (zum Lichtwellenleiter LW2 gehörig) der Außenhülle AH rot und den rechten Teil (zum Lichtwellenleiter LW1 gehörig) blau. Dies kann z.B. dadurch erfolgen, daß die beiden Schmalseiten (Außenseiten) beim Bändchen BD eingefärbt werden, was durch die mit FCA1 und FCA2 bezeichnete Punktierung angedeutet ist.

Das Bändchen nach Figur 1 bildet eine leicht auseinandernehmbare und damit spleißbare Einheit, wobei die beiden Lichtwellenleiteradern LA1 und LA2 durch ihre unterschiedliche Farbgebung in einfacher Weise voneinander unterscheidbar sind.

Mehrere derartige Bändchen BD, wie sie in Fig. 1 im einzelnen dargestellt sind, werden in geeigneter Weise zu einem Kabelelement zusammengefaßt, wie dies z.B. in Figur 2 näher dargestellt ist. Hier sind insgesamt zwölf derartige Bändchen BD1 bis BD12 vorgesehen, wobei angenommen wird, daß jedes dieser Bändchen in sich wendelförmig verläuft, also einen Umkreis entsprechend der größten Quer-ausdehnung eines Zweierpaares einnimmt. Diese (gesehen in Längsrichtung des Kabelelementes CE) wendelförmige Struktur hat den Vorteil, daß die aus derartigen Bändchen BD1 - BD12 gebildete Gesamtanordnung bei einem etwaigen Biegen keine allzugroße Dehnung der einen Lichtwellenleiterader eines Bändchens und keine allzugroße Stauchung der anderen Lichtwellenleiterader des gleichen Bändchens ergibt, sondern eine gewisse gleichmäßige und damit stark verringerte Verteilung der Belastung auf beide Adern. Außerdem sind gegenseitige Ausgleichsvorgänge der einzelnen Bändchen BD1 bis BD12 bei entsprechend loser Packung gegen-

einander möglich, so daß gegenseitige Gleit- und Absetzbewegungen erfolgen können, welche die mechanischen Belastungen
der einzelnen Bändchenstrukturen ebenfalls verringern. Es ist
zweckmäßig, die einzelnen Bändchen BD1 -BD12 in einer entsprechenden weichen Füll- oder Gleitmasse (z.B. aus tixothropiertem Öl oder dergleichen) anzuordnen, um die Beweglichkeit
zu verbessern, wobei das in Figur 2 dargestellte Kabelelement
CE von einer ein- oder mehrschichtigen Kabelhülle CS (Kabelmantel) umgeben wird, um ein entsprechendes optisches Kabel zu
bilden. Es besteht auch die Möglichkeit, mehrere derartige
Kabelelemente CE nach Figur 2 jeweils zu einem Bündel zusammenzufassen (z.B. durch eine Haltewendel oder einen Schlauch)
und diese Bündel miteinander zu verseilen, so daß ein mit
einem Mantel versehenes Kabel entsteht, das aus mehreren
Kabelelementen CE zusammengesetzt ist.

In Fig. 3 sind Bändchen BD11 bis BD23 gezeichnet, die lose und
unverdrallt nebeneinander liegen (ggf. in kleinen Stapeln) und
von einem gemeinsamen Kabelmantel CS1 umschlossen sind.

Nachfolgend wird ein Ausführungsbeispiel für die Farbkennzeichnung des in Figur 2 dargestellten Kabelelements CE mit
insgesamt 12 Bändchen BD1-BD12 gegeben.

Nimmt man an, daß insgesamt 6 verschiedene Farben zur
Verfügung stehen, nämlich rot, grün, gelb, blau, weiß und
schwarz und daß zusätzlich auch farblose Lichtwellenleiteradern, also ohne eine zusätzliche Farbschicht (z.B. FC1 in
Figur 1) verwendet werden, so ergeben sich folgende Kombinationsmöglichkeiten:

          Bändchen BD1 rot - farblos
          Bändchen BD2 rot - grün
          Bändchen BD3 rot - gelb
          Bändchen BD4 rot - blau
          Bändchen BD5 rot - weiß
          Bändchen BD6 rot - schwarz.

Innerhalb einer derartigen Gruppe von z.B. 6 Bändchen dominiert also eine Farbe (in vorliegendem Beispiel rot), wobei die Kombination rot-rot nicht auftreten darf, weil andernfalls die Identifizierbarkeit der beiden Lichtwellenleiteradern innerhalb des jeweiligen Bändchens nicht mehr gegeben wäre. Die weiteren Bändchen der in Figur 2 dargestellten Struktur können beispielsweise dann wie folgt untereinander und auch von den Bändchen BD1 - BD6 unterschieden werden:

Bändchen BD7 grün - farblos

Bändchen BD8  grün - gelb

Bändchen BD9 grün - blau

Bändchen BD10 grün - weiß

Bändchen BD11 grün -schwarz.

In dieser Gruppe von Bändchen dominiert somit die Farbe grün, welche diese Gruppe von Lichtwellenleitern kennzeichnet. Die Kombination grün - rot ist nicht zulässig, weil sie mit rot - grün (BD2) verwechselbar wäre. Für das Bändchen BD12 ist also eine andere Kombination, z.B. gelb - blau notwendig. Auf diese Weise kann mit einer begrenzten Anzahl von Farben, in vorliegendem Beispiel 6 Farben plus farblos eine große Gesamtzahl von Lichtwellenleiteradern, eindeutig gekennzeichnet werden. Bei 7 Farben sind $\binom{7}{2} = \frac{7 \cdot 6}{1 \cdot 2} = 21$ Kombinationen (Bändchen bzw. Paare) möglich, so daß insgesamt 42 Lichtwellenleiter in einem Kabelelement CE vorgesehen sein können. Werden mehr Unterscheidungsmöglichkeiten benötigt, so ist eine weitere Farbe hinzuzufügen.

Es besteht auch die Möglichkeit, wie in Fig. 4 dargestellt ist, durch Bildung entsprechender zusätzlich identifizierbarer Einzelbündel EB1 bis EB3, eine Unterscheidung von einem Einzelbündel zum anderen zu treffen. Die Einzelbündel EB1 bis EB3 können ähnlich Fig. 2 aufgebaut werden, wobei statt des Kabelmantels CS eine Schutzhülle (CSE1 bis CSE3) verwendet wird, die jeweils von einem Einzelbündel zum nächsten farblich unterschieden ist. Auch unterschiedlich gefärbte Haltewendeln für die Einzelbündel EB1 bis EB3 sind denkbar. Innerhalb der Einzelbündel EB1 bis EB3 können die gleichen Farbkombinationen verwendet sein, weil die Unterscheidung untereinander durch die Schutzhüllen CSE1 bis CSE3 bewirkt wird. Diese Anordnung wird von einem gemeinsamen Kabelmantel CSG umschlossen. Die Bändchen-Paare innerhalb der Einzelbündel sind zur Vereinfachung der Darstellung nicht gekennzeichnet.

Bei der Erfindung kann somit eine einfache Grund-Lagerhaltung mit z.B. n Farben angewandt werden, wobei durch entsprechende Kombination zweier untersiedlich eingefärbter Lichtwellenleiteradern zu einem Bändchen eine große Anzahl von Unterscheidungsmöglichkeiten gegeben sind. Die mechanischen Probleme können in einfacher Weise gelöst werden. Allgemein sind bei n Farben $\binom{n}{2}$ Bändchen (Aderpaare) möglich, die sicher und eindeutig unterscheidbar sind.

Die Erfindung ist mit besonderem Vorteil im Rahmen von LWL-Ortskabeln einsetzbar, weil dort jeder Teilnehmer ohnehin zwei Lichtwellenleiteradern benötigt, so daß das System auch in diesem Zusammenhang zweckmäßiger als jedes andere bisher bekannte ist.

14 Patentansprüche
4 FIG

Patentansprüche

1. Kabelelement (CE) bestehend aus einer Vielzahl von Lichtwellenleitern, welche durch unterschiedliche Farbkennzeichnung unterscheidbar gemacht sind,
d a d u r c h   g e k e n n z e i c h n e t ,
daß je zwei Lichtwellenleiter (LW1,LW2) mechanisch zu einem Bändchen (BD) zusammengefaßt sind, daß jeweils die beiden Lichtwellenleiter (LW1,LW2) innerhalb eines Bändchens (BD) durch eine unterschiedliche Farbkennzeichnung (FC1,FC2) unterscheidbar gemacht sind und daß alle Bändchen (BD1,BD2) innerhalb des Kabelelements (CE) gegenseitig unterschiedliche Farbkombinationen aufweisen.

2. Kabelelement nach Anspruch 1,
d a d u r c h   g e k e n n z e i c h n e t ,
daß einer der Lichtwellenleiter farblos ist.

3. Kabelelement nach einem der vorhergehenden Ansprüche,
d a d u r c h   g e k e n n z e i c h n e t ,
daß die beiden Lichtwellenleiter (LW1;LW2) auf ihrer Beschichtung (CT1,CT2) eine durchgehende Farbkennzeichnung (FC1,FC2) aufweisen.

4. Kabelelement nach einem der vorhergehenden Ansprüche,
d a d u r c h   g e k e n n z e i c h n e t ,
daß die beiden Lichtwellenleiter (LW1,LW2) durch ein, vorzugsweise UV-vernetzbares, Bindemittel miteinander verbunden sind.

5. Kabelelement nach Anspruch 4,
d a d u r c h   g e k e n n z e i c h n e t ,
daß die beiden Lichtwellenleiter (LW1,LW2) durch Klebematerial miteinander verbunden sind.

6. Kabelelement nach Anspruch 4,
dadurch gekennzeichnet,
daß die beiden Lichtwellenleiter (LW1,LW2) durch einen
farblosen Lack miteinander verbunden sind.

7. Kabelelement nach einem der Ansprüche 4 - 6,
dadurch gekennzeichnet,
daß das zur Verbindung der Lichtwellenleiter (LW1,LW2)
dienende Verbindungsmaterial farblos ist und daß die
einzelnen Lichtwellenleiter selbst eine unterschiedliche
Farbkennzeichnung (FC1,FC2) aufweisen.

8. Kabelelement nach einem der vorhergehenden Ansprüche,
dadurch gekennzeichnet,
daß die Bändchen (BD) in ihren, vorzugsweise äußeren Teilbereichen (Schmalseiten) mit einer durchgehenden Farbkennzeichnung (FCA1,FCA2) versehen sind.

9. Kabelelement nach einem der vorhergehenden Ansprüche,
dadurch gekennzeichnet,
daß das zur Verbindung der beiden Lichtwellenleiter (LW1,
LW2) dienende Material unterschiedlich eingefärbt ist.

10. Kabelelement nach einem der vorhergehenden Ansprüche,
dadurch gekennzeichnet,
daß jedes Bändchen (BD1,BD2,BD3) in sich verdreht ist (Fig. 2).

11. Kabelelement nach einem der vorhergehenden Ansprüche,
dadurch gekennzeichnet,
daß das Kabelelement (CE) innerhalb eines Kabelmantels (CS)
angeordnet ist.

12. Kabelelement nach einem der Ansprüche 1 - 10,
dadurch gekennzeichnet,
daß innerhalb eines Kabelmantels (GSG) mehrere Kabelelemente
(EB1,EB2,EB3) angeordnet sind.

003 02 02

13. Kabelelement nach Anspruch 12,
d a d u r c h   g e k e n n z e i c h n e t ,
daß die Kabelelemente (EB1,EB2,EB3) jeweils Bändchen mit
gleichen Farbkombinationen enthalten und daß zur Identifizierung die Kabelelemente (EB1,EB2,EB3) durch entsprechende zusätzliche Kennzeichnungen untereinander unterscheidbar gemacht sind.

14. Kabelelement nach Anspruch 13,
d a d u r c h   g e k e n n z e i c h n e t ,
daß die Kabelelemente (EB1,EB2,EB3) innerhalb unterschiedlich
gekennzeichneter Hüllen (CSE1,CSE2,CSE3) oder Haltewendeln
angeordnet sind.

FIG 1

FIG 2

FIG 3

FIG 4